(19) Europäisches Patentamt
European Patent Office
Office européen des brevets

(11) **EP 2 879 281 A1**

(12) **EUROPEAN PATENT APPLICATION**

(43) Date of publication:
**03.06.2015 Bulletin 2015/23**

(51) Int Cl.:
**H02K 21/14** *(2006.01)* **H02K 7/18** *(2006.01)*

(21) Application number: **14185450.5**

(22) Date of filing: **18.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.09.2013 JP 2013195039**

(71) Applicant: **Kabushiki Kaisha Toshiba Tokyo 105-8001 (JP)**

(72) Inventors:
• **Arata, Masanori**
  **Tokyo (JP)**
• **Ueda, Takashi**
  **Tokyo (JP)**
• **Hirose, Takaaki**
  **Tokyo (JP)**

(74) Representative: **Granleese, Rhian Jane**
  **Marks & Clerk LLP**
  **90 Long Acre**
  **London WC2E 9RA (GB)**

(54) **Permanent magnet rotary electrical machine and wind-power generation system**

(57)   The permanent magnet rotary electrical machine according to an embodiment includes a rotor core and a stator core. The rotor core is attached to a rotation shaft, and has permanent magnets. The stator core is disposed to face the rotor core in a radial direction of the rotation shaft, and has slots and coils. The slots are provided with coils. Here, the coils are wound in a concentrated winding. Besides, the number of slots per pole and phase q is a fraction satisfying the following relational expression (A).

$$1/4 < q < 1/2 \quad ... (A)$$

FIG.2

## Description

FIELD

Embodiments described herein relate generally to a permanent magnet rotary electrical machine and a wind-power generation system.

BACKGROUND

A permanent magnet rotary electrical machine includes a rotor where permanent magnets are provided at a rotor core and a stator where coils are provided at slots of a stator core. The permanent magnet rotary electrical machine is, for example, an inner rotor type, and the stator is disposed at outside of the rotor in a radial direction of a rotation shaft.

The permanent magnet rotary electrical machine is used as, for example, a power generator in a wind-power generation system. The permanent magnet rotary electrical machine includes distributed winding coils, and is constituted such that the number of slots per pole and phase q is a fraction satisfying a relationship of $1 < q \leq 3/2$. For example, when the permanent magnet rotary electrical machine is a three-phase alternating-current generator (the number of phases m = 3), and includes 14 poles of permanent magnets (the number of poles p = 14) and 48 pieces of slots (the number of slots s = 48), the number of slots per pole and phase q is 8/7 ($q = s/(m \times p) = 48/(3 \times 14)$).

According to the constitution as stated above (fractional slot), in the permanent magnet rotary electrical machine, kinds of the number of slots s which can be applied increase even when the number of poles p is increased when the number of slots per pole and phase q is set to be the same compared to a case when the number of slots per pole and phase q is an integer (integral slot). As a result, it is possible to suppress that the number of slots s increases. Besides, even when the number of poles p is increased to make a frequency of an induced voltage large in a low-speed power generator, it is possible to suppress the increase of the number of slots in the fractional slot compared to the integral slot, and therefore, it is possible to suppress that the number of punching processes to form the slots increases.

In recent years, the wind-power generation system is installed on the ocean, and large-sizing thereof has been in progress. In accordance with the above, a low-speed wind-power generation system has been required from a relationship between a large-sized diameter of a windmill blade and a strength thereof. Further, in the wind-power generation system, there is a case when a power generator is directly driven at a low speed without providing a speed-increasing gear between a windmill and the power generator to enable reduction in maintenance and improvement in reliability in accordance with the installation on the ocean. For example, the drive of the power generator is performed under a condition at approximately 10 rotations per a minute.

To output a voltage of 50 Hz to 60 Hz at an output part of the power generation system, a frequency of an output of the power generator is converted at an inverter. However, a lower limit of the frequency input to the inverter (input lower limit frequency) is, for example, approximately 10 Hz, and therefore, it is necessary to make the number of poles p large to set a power generation voltage of the power generator at the lower limit frequency. For example, the number of poles p is 120 poles to 140 poles. Besides, in this case, the number of slots s is 480 pieces when the above-stated permanent magnet rotary electrical machine is used as the power generator.

In consideration of these circumstances, in the permanent magnet rotary electrical machine, a cross-sectional area per one slot becomes small, and a ratio occupied by an insulation film in the slot becomes large, and therefore, a cross-sectional area of a coil capable of being inserted into the slot becomes small. As a result, in the permanent magnet rotary electrical machine, a copper loss of the coil becomes large, and there is a case when it is difficult to enough improve efficiency of power generation and so on. In particular, when the permanent magnet rotary electrical machine is used as the power generator driven at low-speed, there is a case when occurrences of the above-stated problems become obvious.

BRIEF DESCRIPTION OF THE DRAWINGS

FIG. 1 is a view illustrating a principal part of a wind-power generation system according to an embodiment.
FIG. 2 is a view illustrating a principal part of a permanent magnet rotary electrical machine according to the embodiment.
FIG. 3 is a view illustrating a principal part of the permanent magnet rotary electrical machine according to the embodiment.
FIG. 4 is a view illustrating a part of a stator core in the permanent magnet rotary electrical machine according to the embodiment.
FIG. 5 is a view schematically illustrating a disposition of coils in the permanent magnet rotary electrical machine according to the embodiment.

FIG. 6 is a view illustrating a relationship between the number of slots per pole and phase q and a coil coefficient K, and a relationship between the number of slots per pole and phase q and a copper loss ratio Z in the permanent magnet rotary electrical machine according to the embodiment.

FIG. 7 is a view illustrating a principal part as for a modification example of a wind-power generation system according to the embodiment.

DETAILED DESCRIPTION

According to one embodiment, a permanent magnet rotary electrical machine includes a rotor core and a stator core. The rotor core is attached to a rotation shaft, and has permanent magnets. The stator core is disposed to face the rotor core in a radial direction of the rotation shaft, and has slots and coils. The slots are provided with coils. Here, the coil is wound in a concentrated winding. Besides, the number of slots per pole and phase q is a fraction satisfying the following relational expression (A).

$$1/4 < q < 1/2 \qquad (A)$$

Embodiments are described with reference to the drawings.

[A] Configuration of Wind-Power Generation System

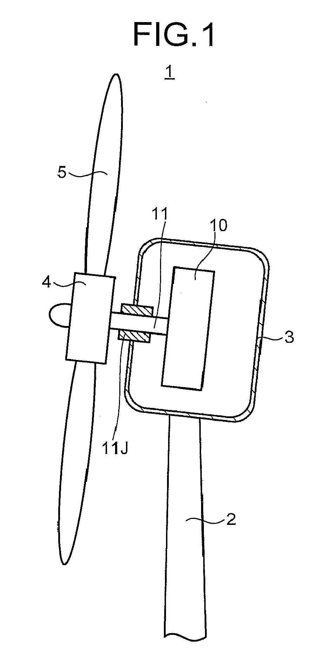

FIG. 1 is a view illustrating a principal part of a wind-power generation system according to an embodiment. In FIG. 1, a side surface of the wind-power generation system is schematically illustrated, and a cross section is illustrated as for a part thereof.

A wind-power generation system 1 is, for example, a propeller windmill in an up-wind type as illustrated in FIG. 1 and includes a tower 2, a nacelle 3, a rotor hub 4, and blades 5.

In the wind-power generation system 1, the tower 2 extends along a vertical direction, and a lower end part of the tower 2 is fixed to a base (not-illustrated) embedded in an underground.

The nacelle 3 is provided at an upper end part of the tower 2. A permanent magnet rotary electrical machine 10 is housed in the nacelle 3 as a power generator. In the permanent magnet rotary electrical machine 10, a rotation shaft 11 extends approximately along a horizontal direction, and the rotation shaft 11 is rotatably supported by a bearing 11J.

The rotor hub 4 is provided at the rotation shaft 11 of the permanent magnet rotary electrical machine 10.

The blades 5 are provided at the rotor hub 4. The blades 5 extend toward outside in a radial direction of the rotation shaft 11. The blades 5 are disposed at an equal interval in a circumferential direction (rotation direction) of the rotation shaft 11 centering on the rotor hub 4.

In the wind-power generation system 1, for example, the blades 5 receive wind flowing along an axial direction of the rotation shaft 11, the rotation shaft 11 rotates, and thereby, power generation is performed at the permanent magnet rotary electrical machine 10.

[B] Configuration of Permanent Magnet Rotary Electrical Machine 10

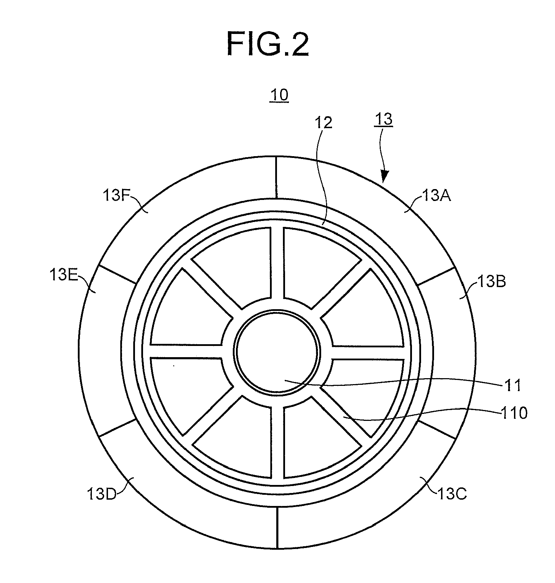

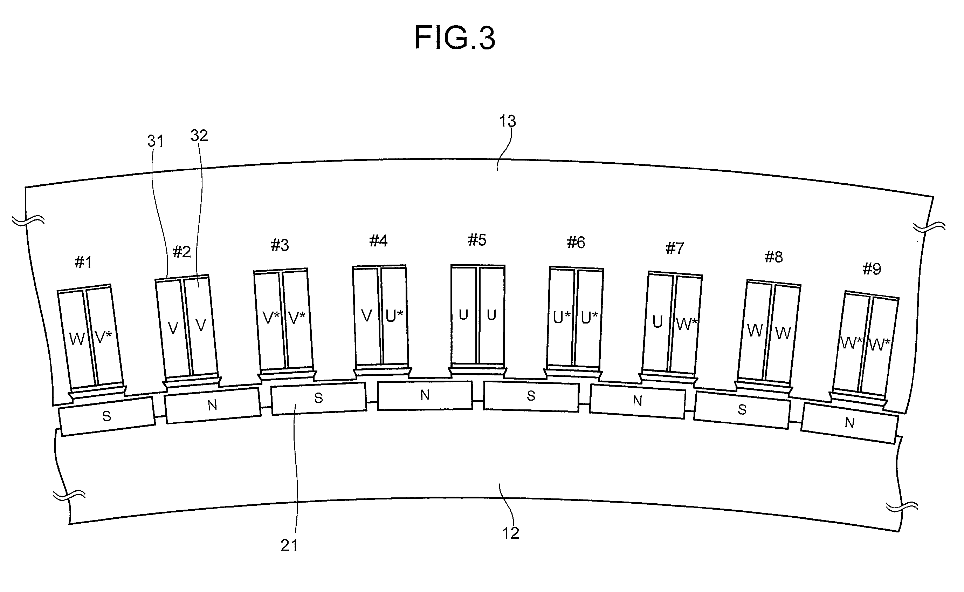

FIG. 2 and FIG. 3 are views each illustrating a principal part of a permanent magnet rotary electrical machine according to the embodiment. FIG. 2 schematically illustrates a front face of the permanent magnet rotary electrical machine. Besides, FIG. 3 enlargedly illustrates a part of FIG. 2. Note that detailed parts such as permanent magnets 21, slots 31, and coils 32 illustrated in FIG. 3 are not illustrated in FIG. 2.

The permanent magnet rotary electrical machine 10 includes the rotation shaft 11, a rotor core 12, and a stator core 13 as illustrated in FIG. 2 and FIG. 3.

Details are described later, but in the present embodiment, the permanent magnet rotary electrical machine 10 is applied for the wind-power generation system 1 (refer to FIG. 1) as, for example, a three-phase alternating-current power generator (the number of phases m = 3) in an inner rotor type. Besides, at the stator core 13, the coil 32 is wound in a concentrated winding. In addition, the number of slots per poles and phase q is a fraction satisfying the following relational expression (A).

$$1/4 < q < 1/2 \quad ... (A)$$

Note that the number of slots per pole and phase q is represented by the following expression (B) by the number of slots s, the number of poles p, and the number of phases m.

$$q = s/(p \times m) \quad ... (B)$$

Hereinafter, details of each part constituting the permanent magnet rotary electrical machine 10 are sequentially described.

[B-1 Rotation Shaft 11

The rotation shaft 11 is a columnar shape as illustrated in FIG. 2 and FIG. 3, and the rotor core 12 is attached thereto via a rib 110.

[B-2] Rotor Core 12

The rotor core 12 is a cylindrical shape as illustrated in FIG. 2 and FIG. 3, and an inside diameter thereof is larger than an outside diameter of the rotation shaft 11. An inner peripheral surface of the rotor core 12 is disposed to face an outer peripheral surface of the rotation shaft 11 in the radial direction of the rotation shaft 11, and the rotor core 12 is coaxial with the rotation shaft 11. The rotor core 12 is fixed to the rotation shaft 11 via the rib 110, and rotates in accordance with rotation of the rotation shaft 11.
The rotor core 12 is formed by, for example, stacking plural electromagnetic steel sheets. The rotor core 12 may be formed by, for example, folding a ferromagnetic material such as iron into a circular shape, or it may be formed as a casting and so on in which the ferromagnetic material is made into a cylindrical shape.
As illustrated in FIG. 3, the rotor core 12 is provided with the permanent magnets 21. The permanent magnets 21 are provided in plural at an outer peripheral part of the rotor core 12. The plural permanent magnets 21 are disposed at an equal pitch such that polarities thereof alternate in the circumferential direction (rotation direction) of the rotation shaft 11 (refer to FIG. 2).
In FIG. 3, eight permanent magnets 21 are illustrated, but in the present embodiment, for example, 160 pieces of the permanent magnets 21 are attached to the outer peripheral part of the rotor core 12.

[B-3] Stator Core 13

The stator core 13 is a cylindrical shape as illustrated in FIG. 2 and FIG. 3, and an inside diameter thereof is larger than an outside diameter of the rotor core 12. An inner peripheral surface of the stator core 13 is disposed to face an outer peripheral surface of the rotor core 12 with a distance in the radial direction of the rotation shaft 11, and the stator core 13 is coaxial with each of the rotation shaft 11 and the rotor core 12.
As illustrated in FIG. 2, in the present embodiment, the stator core 13 is made up by combining plural stator core members 13A to 13F. For example, the stator core 13 is made up by combining six pieces of stator core members 13A to 13F which are divided into the same shape with each other.
As illustrated in FIG. 3, the stator core 13 has slots 31 and the slots 31 are formed in plural at the inner peripheral surface of the stator core 13. The plural slots 31 are arranged at an equal pitch in the circumferential direction (rotation direction) of the rotation shaft 11 (refer to FIG. 2).
In the present embodiment, the number of slots s in which the slots 31 are formed at the stator core 13 is an integral multiple of the number of plural stator core members 13A to 13F which make up the stator core 13. In FIG. 3, the slots 31 whose slot numbers are from one (#1) to nine (#9) are illustrated. However, in the present embodiment, the slots 31 are formed along a whole circumference, and therefore, for example, the slots 31 whose slot numbers are from one (#1) to 180 (#180) are formed. Namely, 180 pieces of the slots 31 as a total are formed at the inner peripheral part of the stator core 13, and the number of slots s is the integer multiple of the number of stator core members 13A to 13F (six).
As illustrated in FIG. 3, the stator core 13 is provided with coils 32, and the coils 32 are provided in plural at the slot 31 of the stator core 13.
In the present embodiment, as illustrated in FIG. 3, U-phase coils 32, V-phase coils 32, and W-phase coils 32 are each included. The u-phase coils 32 are parts represented by "U" and "U*" in FIG. 3, and the "U" and the "U*" indicate that flowing current directions are in reverse from one another. The V-phase coils 32 and the W-phase coils 32 are represented similarly.
As illustrated in FIG. 3, two coils 32 are disposed at one slot 31. Namely, the coil 32 is so-called in a duplex winding. For example, at the slot 31 whose slot number is one (#1), both the V-phase coil 32 and the W-phase coil 32 are disposed.

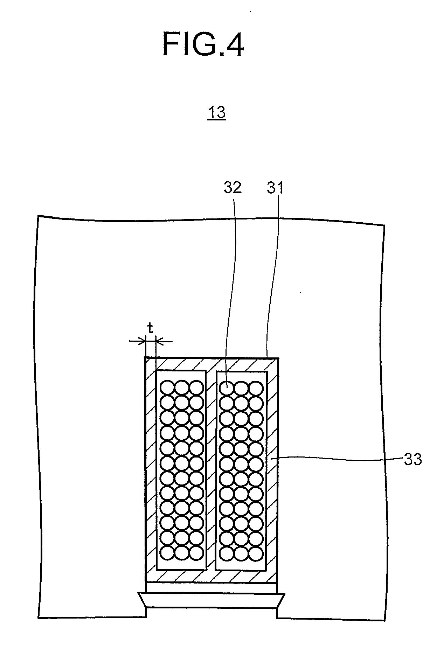

FIG. 4 is a view illustrating a part of the stator core in the permanent magnet rotary electrical machine according to the embodiment. FIG. 4 enlargedly illustrates a part of a slot part in FIG. 3.

As illustrated in FIG. 4, an insulation film 33 is formed between a part where the slot 31 is formed and the coil 32 at the stator core 13, and both are electrically insulated by the insulation film 33.

Besides, the insulation film 33 is also formed between two coils 32 disposed at one slot 31 as illustrated in FIG. 4, and both are electrically insulated by the insulation film 33.

Note that a thickness t of the insulation film 33 is determined by a size of a voltage and so on induced at the permanent magnet rotary electrical machine 10. The thickness t of the insulation film 33 does not change even if the cross sectional area of the slot 31 is made small, and therefore, a ratio occupied by the insulation film 33 at the cross sectional area of the slot 31 becomes large when the cross sectional area of the slot 31 is made small.

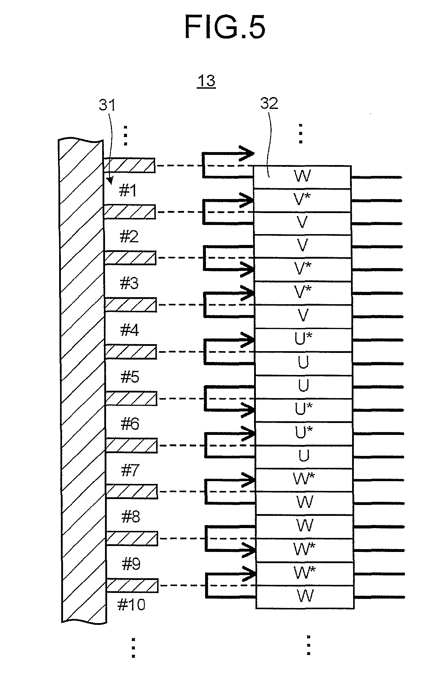

FIG. 5 is a view schematically illustrating a disposition of the coils at the permanent magnet rotary electrical machine according to the embodiment. In FIG. 5, a part is illustrated as same as FIG. 3. Besides, in FIG. 5, the disposition of the coils is illustrated by using "U", "U*", "V", "V*", "W", "W*" as same as FIG. 3.

As illustrated in FIG. 5, a pitch of the slot 31 to be wound is one in each of the U-phase coil 32, the V-phase coil 32, and the W-phase coil 32.

Specifically, the U-phase coils 32 are wound at the slot 31 with a slot number #4 (U*) and the slot 31 with a slot number #5 (U). Similarly, the U-phase coils 32 are wound at the slot 31 with the slot number #5 (U) and the slot 31 with a slot number #6 (U*), and wound at the slot 31 with the slot number #6 (U*) and the slot 31 with a slot number #7 (U).

The V-phase coils 32 are wound at the slot 31 with a slot number #1 (V*) and the slot 31 with a slot number #2 (V). Similarly, the V-phase coils 32 are wound at the slot 31 with the slot number #2 (V) and the slot 31 with a slot number #3 (V*), and wound at the slot 31 with the slot number #3 (V*) and the slot 31 with a slot number #4 (V).

The W-phase coils 32 are wound at the slot 31 with a slot number #7 (W*) and the slot 31 with a slot number #8 (W). Similarly, the W-phase coils 32 are wound at the slot 31 with the slot number #8 (W) and the slot 31 with a slot number #9 (W*), and wound at the slot 31 with the slot number #9 (W*) and the slot 31 with a slot number #10 (W).

Although it is not illustrated, in the present embodiment, the disposition between the slot number #1 to the slot number #9 is sequentially repeated at positions other than the slot number #1 to the slot number #9. Accordingly, there are 60 pieces of the U-phase coils 32, the V-phase coils 32, and the W-phase coils 32 each, and 180 pieces of the coils 32 as a total are provided at 180 pieces of the slots 31. As stated above, the coil 32 is wound in the "concentrated winding" in the present embodiment.

[B-4] The number of Slots per Pole and Phase q

In the permanent magnet rotary electrical machine 10 of the present embodiment, the number of slots s is 180 pieces (s = 180), the number of poles p is 160 poles (p = 160), and the number of phases m is three phases (m = 3) as stated above.

Accordingly, the permanent magnet rotary electrical machine 10 of the present embodiment is a fraction whose number of slots per pole and phase q is "3/8" (q = 3/8) from the above-stated expression (B). Therefore, the permanent magnet rotary electrical machine 10 according to the present embodiment satisfies the relationship (1/4 < q < 1/2) of the above-stated expression (A).

[C] Relationship of Expression (A)

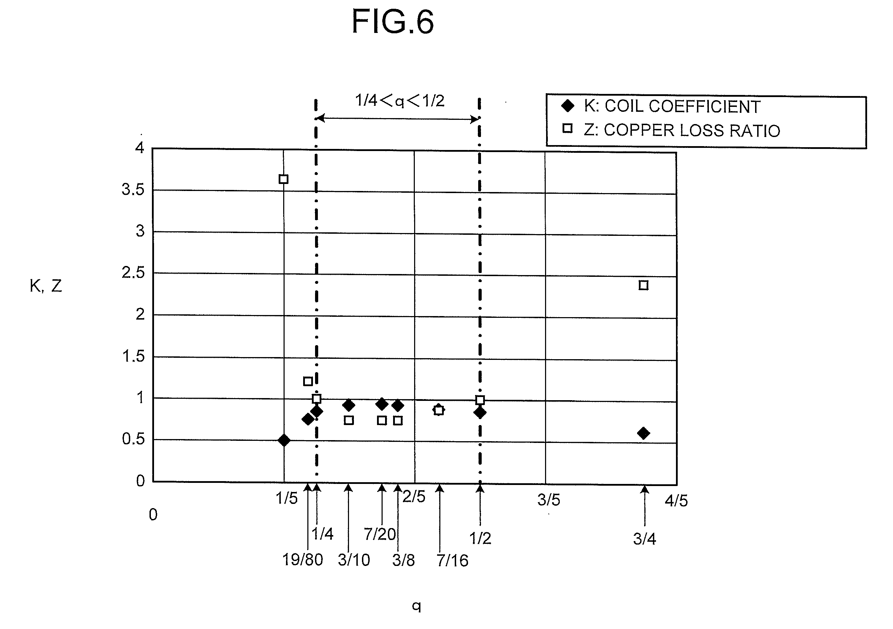

FIG. 6 is a view illustrating a relationship between the number of slots per pole and phase q and a coil coefficient K, and a relationship between the number of slots per pole and phase q and a copper loss ratio Z in the permanent magnet rotary electrical machine according to the embodiment.

In FIG. 6, results of simulations are illustrated as for the relationship between the number of slots per pole and phase q and the coil coefficient K, and the relationship between the number of slots per pole and phase q and the copper loss ratio Z. In FIG. 6, a horizontal axis is the number of slots per pole and phase q. On the other hand, a vertical axis is the coil coefficient K or the copper loss ratio Z. A design simulation of the permanent magnet rotary electrical machine is performed while changing the number of slots per pole and phase q.

In the above description, the "coil coefficient K" means a degree of magnetic coupling between the permanent magnet 21 and the coil 32. Besides, the "copper loss" means an energy which is lost by an electrical resistance of the coil 32, and the "copper loss ratio Z" means a ratio of the copper loss relative to the copper loss when the number of slots per pole and phase q is 1/2. Namely, the "copper loss ratio Z" means the copper loss when the number of slots per pole and phase q is changed under a condition in which the copper loss when the number of slots per pole and phase q is 1/2 is set to be one.

Although it is not illustrated, the coil coefficient K is 0.966 when the number of slots per pole and phase q is one (when q = 1, K = 0.966), and at a range when the number of slots per pole and phase q is less than one (q < 1), the coil coefficient K is smaller than the case when the number of slots per pole and phase q is one. However, as illustrated in FIG. 6, when the number of slots per pole and phase q is set to be further smaller than 1/2 (q < 1/2), the coil coefficient K becomes a maximum at approximately the same degree of value, and thereafter becomes small.

The copper loss ratio Z becomes small as the number of slots per pole and phase q becomes small at a range in which the number of slots per pole and phase q is less than 1/2 and more than 7/20 (7/20 < q < 1/2) as illustrated in FIG. 6. The copper loss ratio Z becomes approximately constant in a vicinity when the number of slots per pole and phase q is 7/20.

This may be caused by the following reasons. When the number of slots per pole and phase q is less than 7/20, the number of slots per pole and phase q is in proportion to the number of slots s, and therefore, the number of slots s becomes small, and a cross sectional area per one slot 31 (refer to FIG. 4 and so on) becomes large. Accordingly, the radio occupied by the insulation film 33 (refer to FIG. 4 and so on) becomes small in the slot 31, and an area capable of inserting the coil 32 becomes large at the slot 31. Besides, at a range in which the number of slots per pole and phase q is less than 1/2 and more than 7/20, the coil coefficient K becomes large as the number of slots per pole and phase q becomes small, and therefore, the number of coils inserted into the slot 31 decreases, and a current density becomes low. Accordingly, it is conceivable that the copper loss ratio Z becomes low at the range in which the number of slots per pole and phase q is less than 1/2 and more than 7/20 (7/20 < q < 1/2) from the above-stated reasons. Namely, the copper loss becomes small.

Besides, at a range in which the number of slots per pole and phase q is less than 3/10, the copper loss ratio Z becomes large as the number of slots per pole and phase q becomes small.

This may cause by the following reasons. When the number of slots per pole and phase q is less than 3/10 (q < 3/10), the number of slots s becomes small, and the cross sectional area per one slot 31 (refer to FIG. 4 and so on) becomes large. Accordingly, the ratio occupied by the insulation film 33 (refer to FIG. 4 and so on) in the slot 31 becomes small, and therefore, the area capable of inserting the coil 32 becomes large for the extent. However, at the range in which the number of slots per pole and phase q is less than 3/10, a value of the coil coefficient K becomes small as the number of slots per pole and phase q becomes small. As a result, the number of coils inserted into the slot 31 increases, the current density becomes high, and an effect is negated because the slot area increases. Accordingly, it is conceivable that the copper loss ratio Z becomes large, and the copper loss increases.

As illustrated in FIG. 6, at the range in which the number of slots per pole and phase q is more than 1/4 and less than 1/2 as illustrated in the above-stated expression (A), the copper loss ratio Z is lower than the other ranges. Namely, the copper loss is small.

In the wind-power generation system, the ratio occupied by the copper loss is large among a total loss in elements such as a gear and a power generator. As illustrated in FIG. 6, the copper loss is smaller than the case when the number of slots per pole and phase q is 1/2 in which the coil becomes the normal concentrated winding when the number of slots per pole and phase q is within the range of more than 1/4 and less than 1/2 as illustrated in the above-stated expression (A). Accordingly, in the present embodiment, the number of slots per pole and phase q satisfies the above-stated expression (A), and therefore, it is possible to improve the efficiency of the wind-power generation system.

Note that when the number of slots per pole and phase q increases, the number of slots s increases, the number of punching processes when the slots 31 are formed increases, and therefore, it is preferable to set the number of slots per pole and phase q in consideration of this point.

[C] Summary

In the present embodiment, the number of slots per pole and phase q is the fraction satisfying the following relational expression (A) as stated above.

$$1/4 < q < 1/2 \quad ... (A)$$

Specifically, in the permanent magnet rotary electrical machine 10 of the present embodiment, the number of slots s is 180 pieces (s = 180), the number of poles p is 160 poles (p = 160), and the number of phases m is three phases (m = 3) as stated above. Accordingly, the permanent magnet rotary electrical machine 10 of the present embodiment is the fraction whose number of slots per pole and phase q is "3/8" (q = 3/8), and satisfies the relationship of the above-stated expression (A).

Accordingly, in the permanent magnet rotary electrical machine 10 of the present embodiment, it is possible to reduce the copper loss (refer to FIG. 6) as stated above. As a result, it is possible to improve the efficiency of the wind-power generation system 1 in the present embodiment.

In particular, the number of slots per pole and phase q is 3/8 (q = 3/8), and therefore, the coil coefficient K exceeds 0.94 to be approximately a maximum at a region of q < 1/2. Besides, the number of slots becomes appropriate, and the slot cross sectional area becomes approximately a maximum. Accordingly, the copper loss becomes small owing to both effects, the loss becomes a minimum, and it is preferable.

Further, the number of phases is three phases (m = 3), and therefore, it is preferable to connect to a current electric power system.

Besides, in the permanent magnet rotary electrical machine 10 of the present embodiment, the stator core 13 is made up by combining the plural stator core members 13A to 13F as stated above. The number of slots s in which the slots 31 are formed at the stator core 13 is the integral multiple of the number of plural stator core members 13A to 13F making up the stator core 13. Specifically, 180 pieces of the slots 31 as a total are formed at the inner peripheral part of the stator core 13, and the number of slots s is the integral multiple of the number of stator core members 13A to 13F (six pieces). Accordingly, in the present embodiment, it is possible to dispose the same number of the slots 31 to each of the plural stator core members 13A to 13F with each other.

[D] Modification Example

[D-1 Modification Example 1

In the above-stated embodiment, the case when the permanent magnet rotary electrical machine 10 is used as the power generator in the wind-power generation system 1 is described, but it is not limited thereto. The permanent magnet rotary electrical machine 10 may be used for equipment other than the wind-power generation system 1.

[D-2] Modification Example 2

In the above-stated embodiment, the case when the number of slots per pole and phase q is 3/8 (q = 3/8) in the permanent magnet rotary electrical machine 10 is described, but it is not limited thereto. As it is illustrated in the above-stated expression (A), the number of slots per pole and phase q may be other than 3/8 as long as the number of slots per pole and phase q is within the range of more than 1/4 and less than 1/2 (1/4 < q < 1/2).

[D-3] Modification Example 3

In the above-stated embodiment, the case when the number of slots s is 180 pieces (s = 180), and the number of poles p is 160 poles (p = 160) in the permanent magnet rotary electrical machine 10 is described, but it is not limited thereto. As it is illustrated in the above-stated expression (A), it is possible to appropriately select the number of slots s and the number of poles p such that the number of slots per pole and phase q is within the range of more than 1/4 and less than 1/2 (1/4 < q < 1/2).

[D-4] Modification Example 4

In the above-stated embodiment, the case when the number of phases m of the voltage induced in the permanent magnet rotary electrical machine 10 is three phases (U-phase, V-phase, W-phase) is described, but it is not limited thereto. The number of phases m may be other than three phases. For example, it may be two phases, or four phases or more.

[D-5] Modification Example 5

In the above-stated embodiment, the case when the rotor hub 4 is attached to the rotation shaft 11 of the permanent magnet rotary electrical machine 10 in the wind-power generation system 1 is described, but it is not limited thereto.

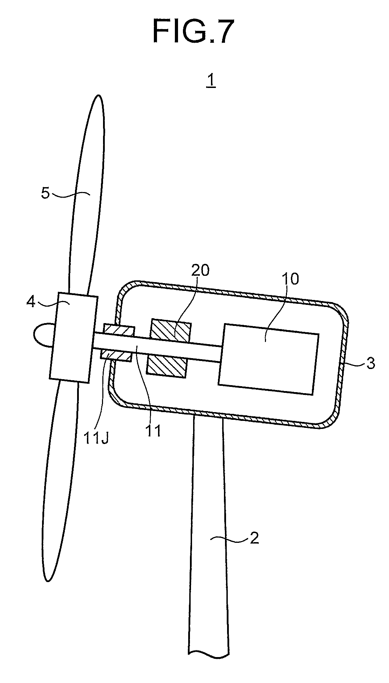

FIG. 7 is a view illustrating a principle part as for a modification example of the wind-power generation system according to the embodiment. In FIG. 7, a side surface of the wind-power generation system is schematically illustrated, and a cross section is illustrated as for a part as same as FIG. 1.

As illustrated in FIG. 7, a gear 20 may be interposed between the rotation shaft 11 and the rotor hub 4 of the permanent magnet rotary electrical machine 10.

[D-6] Modification Example 6

In the above-stated embodiment, the case when the permanent magnet rotary electrical machine 10 is the inner rotor type is described, but it is not limited thereto. The permanent magnet rotary electrical machine 10 may be an outer rotor type. Namely, the rotor may be disposed at outside of the stator in the radial direction of the rotation shaft.

<Others>

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1.  A permanent magnet rotary electrical machine, comprising:

    a rotor core attached to a rotation shaft and having permanent magnets; and
    a stator core disposed to face the rotor core in a radial direction of the rotation shaft, the stator core having slots and coils, the slots being provided with coils,
    wherein the coils are wound in a concentrated winding, and
    wherein the number of slots per pole and phase q is a fraction satisfying the following relational expression (A).

$$1/4 < q < 1/2 \quad \text{... (A)}$$

2.  The permanent magnet rotary electrical machine according to claim 1, wherein the number of slots per pole and phase q is 3/8.

3.  The permanent magnet rotary electrical machine according to claim 1 or claim 2,
    wherein the number of phases is three phases.

4.  The permanent magnet rotary electrical machine according to any one of claims 1 to 3,
    wherein the stator core is made up by combining plural stator core members, and
    the number of slots in which the slots are formed at the stator core is an integral multiple of the number of plural stator core members making up the stator core.

5.  A wind-power generation system, comprising:

    a permanent magnet rotary electrical machine according to any one of claims 1 to 4,
    wherein a rotation shaft of the permanent magnet rotary electrical machine rotates by wind power, and thereby, power generation is performed at the permanent magnet rotary electrical machine.

# FIG.1

EP 2 879 281 A1

# FIG.2

EP 2 879 281 A1

# FIG.3

EP 2 879 281 A1

# FIG.4

<u>13</u>

FIG.5

# FIG.6

EP 2 879 281 A1

# FIG.7

EP 2 879 281 A1

Europäisches
Patentamt

European
Patent Office

Office européen
des brevets

**EUROPEAN SEARCH REPORT**

Application Number

EP 14 18 5450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/026088 A1 (NEWSOUTH INNOVATIONS PTY LTD [AU]; RAHMAN MUHAMMED FAZLUR [AU]; DUTTA) 28 February 2013 (2013-02-28) | 1-3,5 | INV.<br>H02K21/14<br>H02K7/18 |
| Y | * claims 18,19; figure 1 * | 4 | |
| | ----- | | |
| X | WO 2012/017303 A2 (NUOVA SACCARDO MOTORI S R L [IT]; BATTISTELLA FRANCESCO [IT]) 9 February 2012 (2012-02-09) * page 2, line 24 - line 27; figure 2 * * page 7, line 16 - line 19 * | 1-3,5 | |
| | ----- | | |
| Y | US 6 781 276 B1 (STIESDAL HENRIK [DK] ET AL) 24 August 2004 (2004-08-24) * abstract; figure 7 * | 4 | |
| | ----- | | |

TECHNICAL FIELDS
SEARCHED       (IPC)

H02K

The present search report has been drawn up for all claims

| Place of search | Date of completion of the search | Examiner |
|---|---|---|
| Munich | 21 April 2015 | Fromm, Udo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                      

& : member of the same patent family, corresponding
    document

EPO FORM 1503 03.82 (P04C01)

**ANNEX TO THE EUROPEAN SEARCH REPORT**

**ON EUROPEAN PATENT APPLICATION NO.**

EP 14 18 5450

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2015

| Patent document cited in search report | | Publication date | Patent family member(s) | | Publication date |
|---|---|---|---|---|---|
| WO 2013026088 | A1 | 28-02-2013 | NONE | | |
| WO 2012017303 | A2 | 09-02-2012 | EP | 2601729 A2 | 12-06-2013 |
| | | | WO | 2012017303 A2 | 09-02-2012 |
| US 6781276 | B1 | 24-08-2004 | AT | 489759 T | 15-12-2010 |
| | | | AU | 3551200 A | 23-10-2000 |
| | | | DK | 165599 A | 01-10-2000 |
| | | | DK | 1173915 T3 | 07-03-2011 |
| | | | EP | 1173915 A1 | 23-01-2002 |
| | | | EP | 2273652 A1 | 12-01-2011 |
| | | | US | 6781276 B1 | 24-08-2004 |
| | | | WO | 0060719 A1 | 12-10-2000 |

EPO FORM P0459

For more details about this annex : see Official Journal of the European Patent Office, No. 12/82